# NEUE EUROPÄISCHE PATENTSCHRIFT

(11) **EP 0 716 123 B2**
(45) Veröffentlichungstag und Bekanntmachung des Hinweises auf die Entscheidung über den Einspruch: **17.07.2002**
(45) Hinweis auf die Patenterteilung: 07.04.1999
(21) Anmeldenummer: 95810751.8
(22) Anmeldetag: 30.11.1995
(51) Int. Cl.: C08L 27/06, C08K 5/3432, C08K 13/02

(54) **Stabilisiertes Polyvinylchlorid**
Stabilized polyvinyl chloride
Chlorure de polyvinyle stabilisé

(30) Priorität: 09.12.1994 CH 374694
(43) Veröffentlichungstag der Anmeldung: 12.06.1996
(73) Patentinhaber: Crompton Vinyl Additives GmbH, 68623 Lampertheim (DE)
(72) Erfinder: Kuhn, Karl Josef, Dr., D-64686 Lautertal (DE); Wehner, Wolfgang, Dr., D-64372 Ober-Ramstadt (DE)
(74) Vertreter: Wibbelmann, Jobst, Dr., Dipl.-Chem.

(56) Entgegenhaltungen:
- EP-A- 0 286 887
- EP-A- 0 332 514
- EP-A- 0 362 012
- EP-A- 0 453 380
- GB-A- 2 213 154
- JP-A- 61 113 635
- US-A- 4 963 608
- US-A- 5 143 959
- US-A- 5 234 981
- US-A- 5 278 218

## Beschreibung

Die Erfindung betrifft Poly-DHP(Poly-Dihydropyridin)-verbindungen der Formel I, mindestens einen Stoff aus der Gruppe der Zeolithe, und mindestens eine Zn-, Al- oder Lanthanoidenverbindung enthaltendes PVC (Polyvinylchlorid), ein Verfahren zu seiner Herstellung und seine Verwendung.

PVC kann durch eine Reihe von Zusatzstoffen stabilisiert werden. Verbindungen von Blei und Cadmium sind dafür besonders gut geeignet, sind jedoch heute aus ökologischen Gründen wegen des Schwermetallgehalts umstritten. (vgl. "Plastics Additives", Herausgeber R. Gächter und H. Müller, Hanser Verlag, 3. Auflage, 1990, Seiten 287-295 und Kunststoff Handbuch PVC, Band 1 und 2, Beck/Braun, Carl Hanser Verlag).

Man sucht daher weiter nach wirksamen Stabilisatoren und Stabilisatorkombinationen.

Poly-DHP der unten beschriebenen Formel I ist als Stabilisator für PVC bekannt. EP-B-0 286 887 beschreibt solche Verbindungen als Wärmestabilisatoren für insbesondere Hart-PVC Mischungen, die als weitere Stabilisatoren ein Gleitmittel, epoxidiertes Sojabohnenöl, Zink- und Calciumseifen und organische Costabilisatoren enthalten.

Es wurde nun gefunden, daß mit einer Mischung aus einem Poly-DHP der Formel I, mindestens einem Zeolithe, und mindestens einer Zn-, Al- oder Lanthanoidenverbindung stabilisiertes PVC eine hervorragende thermische Stabilität bei sehr guter Farbhaltung aufweist Besonders hervorzuheben ist, daß ausgezeichnete Pastenstabilität und Lichtstabilität erzielt wird.

Die Erfindung betrifft eine Zusammensetzung enthaltend
(a) PVC
(b) mindestens eine Poly-DHP-Verbindung der Formel I 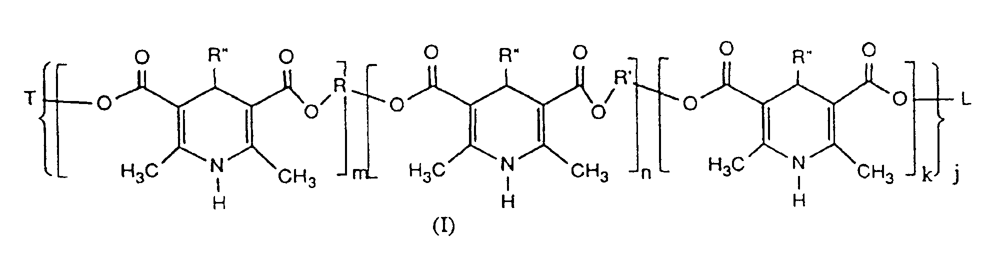 worin
   T für unsubstituiertes oder mit C₁-C₁₈-Alkoxy, C₁-C₁₈-Alkylthio, Hydroxy, Acryloyloxy, Methacryloyloxy, Halogen, Phenyl oder Naphthyl substituiertes C₁-C₂₂ Alkyl;
   unsubstituiertes oder mit C₁-C₁₈-Alkyl, C₁-C₁₈-Alkoxy oder Halogen substituiertes C₅-C₁₀-Aryl, das auch heterocyclisch sein kann;
   C₃-C₁₀-Alkenyl, CH₃-CO-CH₂-CO-OR-, CH₃-CO-CH₂-COO-R',
   CH₃-C(NR"'₂)=CH-COOR- oder CH₃-C(NR'"₂)=CHCO-O R'-ist
   L dieselben Bedeutungen wie T hat oder einen tri- oder polyvalenten Rest aus einer unsubstituierten oder C₁-C₁₂-Alkoxy-, C₁-C₁₂-Thioalkoxy-, C₆-C₁₀-Aryl-,
   C₁-C₁₂-Carboxyl- oder Hydroxysubstituierten gerad- oder verzweigtkettigen Alkylgruppe darstellt,
   m und n Zahlen von 0 bis 20 bedeuten,
   k 0 oder 1 ist,
   j eine Zahl von 1 bis 6 bedeutet und die Bedingungen j (k+ m + n) > 1 und m + n > 0 erfüllt sind,
   R und R' unabhängig voneinander Methylen oder Phenylen sind oder eine Alkylengruppe des Typs -(-CₚH₂ₚ-X-)ₜCₚH₂ₚ- sind, die unsubstituiert ist oder Substituenten aus der Reihe C₁-C₁₂-Alkoxy, C₁-C₁₂-Thioalkoxy, C₆-C₁₀-Aryl-, C₁-C₁₂-Carboxyl- oder Hydroxy trägt, p 2 bis 18 ist,
   t 0 bis 10 ist
   X für Sauerstoff oder Schwefel steht
   oder, wenn k 0 ist und j > 1 ist, R und R' zuammen mit L eine direkte Bindung bedeuten, R" Wasserstoff, oder
   unsubstituiertes oder mit einem oder mehreren C₁-C₁₂-Alkyl-,
   C₁-C₈-Alkoxy-, Halogen- oder NO₂- Substituenten substituiertes C₁-C₁₈-Alkyl,
   C₂-C₁₈-Alkoxycarbonyl oder C₆-C₁₀-Aryl bedeutet,
   und die beiden R"' gleich oder verschieden sind und Wasserstoff, C₁-C₁₈-Alkyl,
   C₁-C₁₈-Hydroxyalkyl oder C₁-C₁₈-Alkoxyalkyl oder zusammen ununterbrochenes oder durch O unterbrochenes C₃-C₅-Alkylen, bedeuten,
   oder gerad- oder verzweigtkettiges C₂-C₂₂-Alkenyl sind,
(c) mindestens einen Stoff aus der Gruppe bestehend aus
   kristallinen oder amorphen Zeolithen,
   sowie
(d) mindestens eine Zn-, Al- oder Lanthanoidenverbindung.

Wenn Reste in obiger Formel I C₁-C₁₈- oder C₁-C₂₂-Alkyl darstellen, handelt es sich dabei um verzweigte oder unverzweigte, cyclische oder acyclische Reste. Beispiele hierfür sind Methyl, Ethyl, Propyl, Isopropyl, n-Butyl, Isobutyl, t-Butyl, Pentyl, Cyclopentyl, Isopentyl, Hexyl, Cyclohexyl, Heptyl, 3-Heptyl, Octyl, Cyclooctyl, 2-Ethylhexyl, Nonyl, Decyl, Undecyl, Dodecyl, Cyclododecyl, Tridecyl, Tetradecyl, Pentadecyl, Hexadecyl, Heptadecyl, Octadecyl, Eicosyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl; die Reste weisen dabei vorzugsweise 1-12. insbesondere 1-8 C-Atome auf.

Weitere Alkylgruppen in obigen Formeln weisen die gleichen beispielhaften Bedeutungen bis zur entsprechenden Zahl der C-Atome auf. Alkoxy- und Thioalkoxy- bzw. Alkylthio-Reste leiten sich von solchen Alkylgruppen ab, indem jeweils ein Sauerstoff oder Schwefelatom zur O-Alkyl oder S-Alkylgruppe ergänzt wird.

C₃-C₁₀-Alkenyl kann verzweigt oder unverzweigt sein und beispielsweise Allyl, 2-Methallyl, Hexenyl oder Octenyl bedeuten. C₂-C₂₂-Alkenyl kann ebenfalls verzweigt oder unverzweigt sein und z.B. außerdem noch Undecenyl, Heptadecenyl oder Oleyl bedeuten.

Bedeuten Substituenten in Formel I Halogen, ist darunter Fluor, Chlor, Brom und Jod, insbesondere F, Cl und Br, vor allem Cl, zu verstehen.

Cyclische Alkylreste haben bevorzugt 5 bis 12 C-Atome im Ring und tragen gegebenenfalls 1 bis 3 Alkylsubstituenten, bevorzugt Methyl oder Ethylgruppen. Cyclopentyl und Cyclohexyl sind bevorzugt, insbesondere Cyclohexyl.

C₆-C₁₀-Aryl bedeuten beispielsweise Phenyl, α- oder β-Naphthyl, die gegebenenfalls mit Halogen oder C₁-C₄-Alkyl substituiert sind.

Gegebenenfalls heterocyclisches C₅-C₁₀ Aryl kann z.B. Pyrryl, Phenyl, Naphthyl, Pyridyl, Morpholinyl, Furyl, Thiazolyl oder Indolyl sein.

Beispiele für C₂-C₁₂-Carboxyaeste leiten sich von Carbonsäuren ab, wie sie weiter unten bei den Carboxylaten (Metallseifen) ausführlich erläutert werden.

Die **Komponente (a)** ist als PVC im weiteren Sinn zu verstehen, d.h. sie umfaßt auch Blends, Copolymerisate oder Pfropfpolymerisate von PVC mit polymerisierbaren Verbindungen wie Acrylnitril, Vinylacetat oder ABS, wobei es sich um Suspensions-, Masse- oder Emulsionspolymerisate und deren Abmischungen handeln kann. Bevorzugt ist PVC als Suspensions-, Emulsions- und Massepolymerisat auch in Kombination mit Polyacrylaten.

**Komponente (b)** ist bevorzugt mindestens eine Verbindung der Formel I, worin T und L unabhängig voneinander C₁-C₁₈-Alkyl sind, m, k und j 1 sind, n 0 ist, R für -(CH₂)₂-, (CH₂)₄ oder -(CH₂)₂-S-(CH₂)₂- steht und R" Wasserstoff ist. Die Poly-DHP-Verbindungen der Formel I können in einer Menge von zweckmäßig 0,001 bis 5 Gew.-Teilen, bevorzugt 0,01 bis 0,5 Gew.Teilen, bezogen auf 100 Gew.-Teile PVC, in den Zusammensetzungen enthalten sein.

Zeolithe können durch die allgemeine Formel (X)

M_{q/a}[(AlO₂)_{q}(SiO₂)ᵣ]·wH₂O (X)

dargestellt werden,
worin a die Ladung des Kations M,
M ein Element der ersten oder zweiten Hauptgruppe sowie Zink,
q:r eine Zahl zwischen 0,8 und unendlich, vorzugsweise zwischen 0,8 und 10,5 und
w eine Zahl zwischen 0 und 300 ist,
entspricht.

Weiter sind erfindungsgemäß verwendbare Zeolithe aus "Atlas of Zeolite Structure Types", W.M. Meier und D.H. Olson, Verlag Butterworths, 3. Auflage 1992 bekannt.

Zu Zeolithen im weiteren Sinne sind auch Aluminiumphosphate mit Zeolithstruktur zu rechnen.

Die bevorzugten an sich bekannten Zeolithe weisen einen durchschnittlichen wirksamen Porendurchmesser von 3-5 Å auf und können nach bekannten Methoden hergestellt werden. Besonders bevorzugt sind Zeolithe vom Typ NaA, die einen durchschnittlichen wirksamen Porendurchmesser von 4 Å besitzen, weshalb sie auch als Zeolithe 4A bezeichnet werden.

Besonders bevorzugt sind kristalline Natriumalumosilikate, deren Teilchengröße wenigstens weitaus überwiegend im Bereich von 1-10 µ liegt.

Bevorzugt sind Zeolithe der Formeln

Na₁₂Al₁₂Si₁₂O₄₈·27 H₂O [Zeolith A],

Na₆Al₆Si₆O₂₄·2 NaX · 7,5 H₂O, X= OH, Halogen, ClO₄ [Sodalith]

Na₆Al₆Si₃₀O₇₂·24 H₂O,

Na₈Al₈Si₄₀O₉₆ · 24 H₂O,

Na₁₆Al₁₆Si₂₄O₈₀ · 16 H₂O,

Na₁₆Al₁₆Si₃₂O₉₆ · 16 H₂O,

Na₅₆Al₅₆Si₁₃₆O₃₈₄ · 250 H₂O, [Zeolith Y]

Na₈₆Al₈₆Si₁₀₆O₃₈₄ · 264 H₂O [Zeolith X]

oder die durch teilweisen bzw. vollständigen Austausch der Na-Atome durch Li-, K-, Mg-, Ca-, Sr- oder Zn-Atome darstellbaren Zeolithe wie

(Na,K)₁₀Al₁₀Si₂₂O₆₄·20 H₂O

Ca_{4.5}Na₃[(AlO₂)₁₂(SiO₂)₁₂]· 30 H₂O

K₉Na₃[(AlO₂)₁₂(SiO₂)₁₂] · 27 H₂O

Die Zeolithe können in einer Menge von beispielsweise 0,1 bis 20, zweckmäßig 0,1 bis 10 und insbesondere 0,1 bis 5 Gew.-Teilen, bezogen auf 100 Gew.-Teile PVC, eingesetzt werden.

### Komponente (d):

Unter dem Begriff Lanthanoiden- bzw. Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan, Scandium und Yttrium zu verstehen (Scandium und Yttrium sind hier zu den Lanthanoiden zu zählen), wobei Gemische insbesondere mit Cer bevorzugt sind. Weitere bevorzugte Seltenerd-Verbindungen finden sich in der EP-A-0 108 023. Zu den verwendbaren und bevorzugten Aluminium-Verbindungen finden sich weitere Erläuterungen in US 4,060,512 und US 3,243,394.

Unter Zn, Al oder Lanthanoidenverbindungen sind in erster Linie Metallseifen zu verstehen.

Metallseifen sind in der Hauptsache Metallcarboxylate bevorzugt längerkettiger Carbonsäuren. Geläufige Beispiele sind Stearate und Laureate, auch Oleate und Salze kürzerkettiger Alkylcarbonsäuren. Als Metallseifen sollen auch Alkylbenzoesäuren gelten. Die Metallseifen können einzeln oder in Mischungen eingesetzt werden. Eine Übersicht über gebräuchliche Metallseifen findet sich in Ullmanns Encyclopedia of Industrial Chemistry, 5th Ed. Vol. A16 (1985) S.361 ff).

Zweckmäßig verwendet man organische Metallseifen aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate, Tallate und Rosinate.

Namentlich zu erwähnen sind, als Beispiele, die Zink-, Aluminium oder Scandium-, Yttrium- oder Lanthanoidensalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zink-, Aluminum oder Lanthanoidensalze der Monoester der divalenten Carbonsäuren, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure: und der Di- oder Triester der tri-oder tetravalenten Carbonsäuren, wie Hemimellithsäure, Trimellithsäure, Pyromellithsäure, Zitronensäure.
Bevorzugt sind Zink-, Aluminum oder Lanthanoiden-Carboxylate von Carbonsäuren mit 7 bis 18 C-Atomen (Metallseifen im engeren Sinn), wie beispielsweise Benzoate oder Alkanoate, bevorzugt Stearat, Oleat, Laurat, Palmitat, Behenat, Hydroxystearate, Dihydroxystearate oder 2-Ethylhexanoat. Besonders bevorzugt sind Stearat, Oleat und p-tert-Butylbenzoat. Auch überbasische Carboxylate wie überbasisches Zinkoctoat sind bevorzugt.

Gegebenenfalls kann auch ein Gemisch von Carboxylaten unterschiedlicher Struktur eingesetzt werden.

Gegebenenfalls kann ein Gemisch von Zink-, Aluminium- und/oder Lanthanoid-Verbindung unterschiedlicher Struktur eingesetzt werden. Auch können organische Zink-, Aluminium-, oder Lanthanoid-Verbindungen auf eine Alumosalz-Verbindung gecoatet sein; siehe hierzu auch DE-A-40 31 818.

Die Metallseifen bzw. deren Mischungen können in einer Menge von beispielsweise 0,001 bis 10, zweckmäßig 0,01 bis 8, besonders bevorzugt 0,05 bis 5 Gew.-Teilen, bezogen auf 100 Gew.-Teile PVC, angewandt werden. Gleiches gilt für die weiteren Metallstabilisatoren, die weiter unten beschrieben werden.

Es können weitere Additive zur Stabilisierung der PVC-Mischungen zweckmäßig sein. Es handelt sich beispielsweise um Weichmacher, Metallseifen, weitere Metallstabilisatoren (insbesondere Organozinnstabilisatoren), Füllstoffe und Verstärkungsmittel (wie beispielsweise Calciumcarbonat, Silikate, Glasfasern, Talk, Kaolin, Kreide, Glimmer, Metalloxide und -hydroxide, Ruß oder Graphit), Polyole, organische Phosphite, Antioxidantien, 1,3-Diketoverbindungen, weitere metallfreie Stabilisatoren [wie β-Naphthol, β-Aminocrotonate (z.B. wie in EP 0 465 405, S. 6, Z. 9-14 erwähnt), Phenylindole, Pyrrole, wie z.B. in EP-A-465405 beschrieben, sowie Hydroxydiphenylamine], Lichtschutzmittel, UV-Absorber, Gleitmittel, Fettsäureester, Paraffine, Treibmittel, optische Aufheller, Pigmente, Flammschutzmittel, Antistatika, Phosphate, Thiophosphate, Gelierhilfen, peroxidzerstörende Verbindungen, Modifikatoren, Perchlorate, Epoxide und weitere Komplexbildner für Lewis-Säuren.

### Epoxidverbindungen

Die im Rahmen der Erfindung verwendbaren Epoxidverbindungen (c) können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxiderbindungen enthalten mindestens einen Epoxidrest der Formel I 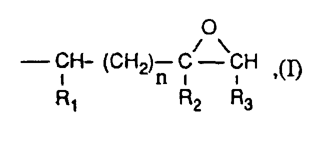 worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist und dieser Epoxidrest direkt an Kohlenstoff, Sauerstoff-, Stickstoff- oder Schwefelatome gebunden ist.

### Beispielhaft für Epoxidverbindungen sind zu erwähnen:

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw β-Methyl-epichlorhydrin. Die Umsetzung erfolgt zweckmäßig in der Gegenwart von Basen.
   Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
   Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
   Weiterhin können aromatische Carbonsäuren Verwendung finden, wie beispielsweise Benzoesäure, Phthalsäure, Isophthalsäure, Trimellithsäure oder Pyromellithsäure.
   Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.
   Weitere im Rahmen dieser Erfindung verwendbare Epoxidverbindungen finden sich in der EP 0 506 617.
II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.
   Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.
   Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
   Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
   Weitere mögliche Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
   Zu den (N-Glycidyl)-Verbindungen zählen aber auch N,N'-Di-, N,N',N"-Tri- und N,N',N",N"'-Tetraglycidylderivate von Cycloalkylenharnstoffen, wie Ethylenharnstoff oder 1,3-Propylenharnstoff, und N,N-Diglycidylderivate von Hydantoinen, wie von 5,5-Dimethylhydantoin oder Glykoluril und Triglycidylisocyanurat.
IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) Epoxidverbindungen mit einem Rest der Formel I, worin R₁ und R₃ zusammen -CH₂-CH₂- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel I, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Geeignete Epoxide sind beispielsweise:
a) flüssige Bisphenol-A-diglycidylether wie Araldit® GY 240, Araldit® GY 250, Araldit® GY 260, Araldit® GY 266, Araldit® GY 2600, Araldit® MY 790:
b) feste Bisphenol-A-diglycidylether wie Araldit® GT 6071, Araldit® GT 7071, Araldit® GT 7072, Araldit® GT 6063, Araldit® GT 7203, Araldit® GT 6064, Araldit® GT 7304, Araldit® GT 7004, Araldit® GT 6084, Araldit® GT 1999, Araldit® GT 7077, Araldit® GT 6097, Araldit® GT 7097, Araldit® GT 7008, Araldit® GT 6099, Araldit® GT 6608, Araldit® GT 6609, Araldit® GT 6610;
c) flüssige Bisphenol-F-diglycidylether wie Araldit® GY 281, Araldit® PY 302, Araldit® PY 306;
d)feste Polyglycidylether von Tetraphenylethan wie CG Epoxy Resin® 0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit® DY 0390, Araldit® DY 0391:
h)flüssige Glycidylether von Carbonsäuren wie Shell® Cardura E Terephthalsäureester, Trimellithsäureester, Araldit® PY 284;
i) feste heterocyclische Epoxidharze (Triglycidylisocyanurat) wie Araldit® PT 810:
j) flüssige cycloaliphatische Epoxidharze wie Araldit® CY 179;
k) flüssige N,N,O-Triglycidylether von p-Aminophenol wie Araldit® MY 0510;
l) Tetraglycidyl-4-4'-methylenbenzamin oder N,N,N',N'-Tetraglycidyldiaminophenylmethan wie Araldit® MY 720, Aradit® MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Antioxidantien:

Bevorzugte Antioxidantien enthalten phenolische Gruppen und entsprechen insbesondere der Formel III, 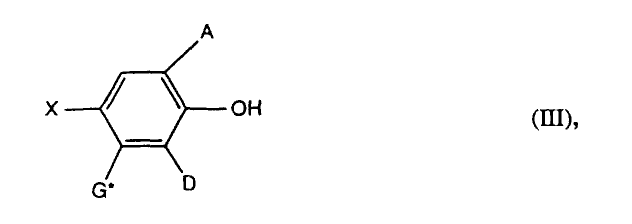 worin
- A: Wasserstoff, C₁-C₂₄-Alkyl, C₅-C₁₂-Cycloalkyl, Phenyl-C₁-C₄-alkyl, Phenyl oder eine Gruppe -CH₂-S-R'₁ oder 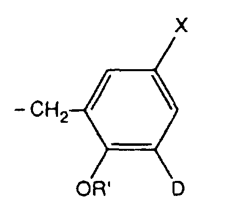 bedeutet,
- D: C₁-C₂₄-Alkyl, C₅-C₁₂-Cycloalkyl, Phenyl-C₁-C₄-alkyl, Phenyl oder eine Gruppe -CH₂-S-R'₁ bedeutet,
- X: Wasserstoff, C₁-C₁₈-Alkyl oder eine der Gruppen -CₐH₂ₐS_{q}-R'₂, -C_{b}H_{2b}-CO-OR'₃, -C_{b}H₂b-CO-N (R'₅)(R'₆), -CH₂N(R'₁₀)(R'₁₁), 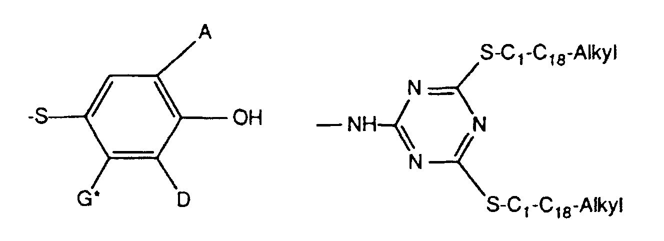 oder 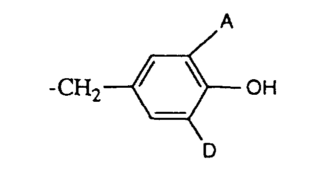 ist,
- R': Wasserstoff oder eine Gruppe der Formel -CO-CH=CH₂ ist,
- G*: für Wasserstoff oder C₁-C₁₂-Alkyl steht,
- R'₁: C₁-C₁₈-Alkyl, Phenyl oder eine Gruppe -(CH₂)_{c}-CO-OR'₄ oder -CH₂CH₂OR'₉ bedeutet,
- R'₂: Wasserstoff, C₁-C₁₈-Alkyl, Phenyl, Benzyl oder eine Gruppe 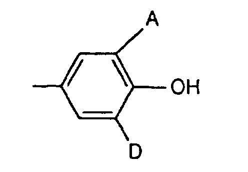 oder -(CH₂)_{c}-CO-OR'₄ oder -CH₂-CH₂-OR'₉ bedeutet,
- R'₃: C₁-C₃₀-Alkyl oder eine der Gruppen -CHR'₇-CH₂-S-R'₈, 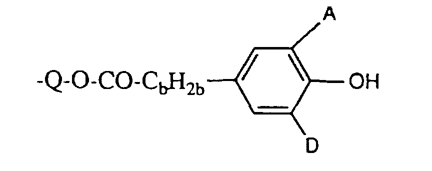 oder 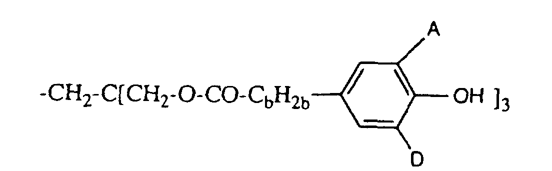 bedeutet, worin Q C₂-C₈-Alkylen, C₄-C₆-Thiaalkylen oder eine Gruppe -CH₂CH₂(OCH₂CH₂)_{d}-ist,
- R'₄: C₁-C₂₄-Alkyl bedeutet,
- R'₅: Wasserstoff, C₁-C₁₈-Alkyl oder Cyclohexyl bedeutet,
- R'₆: C₁-C₁₈-Alkyl, Cyclohexyl, Phenyl, durch C₁-C₁₈-Alkyl substituiertes Phenyl oder eine der Gruppen 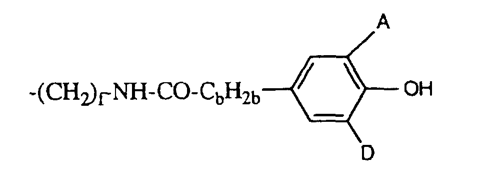 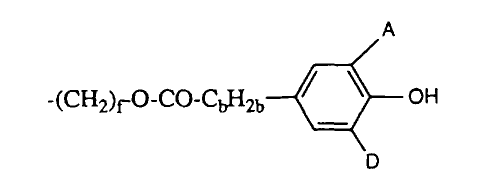 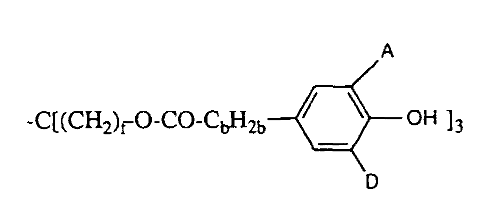 bedeutet, oder R'₅ und R'₆ zusammen C₄-C₈-Alkylen, das durch -O- oder -NH- unterbrochen sein kann, bedeuten,
- R'₇: Wasserstoff, C₁-C₄-Alkyl oder Phenyl bedeutet,
- R'₈: C₁-C₁₈-Alkyl bedeutet,
- R'₉: Wasserstoff, C₁-C₂₄-Alkyl, Phenyl, C₂-C₁₈-Alkanoyl oder Benzoyl bedeutet,
- R'₁₀: C₁-C₁₈-Alkyl, Cyclohexyl, Phenyl, durch C₁-C₁₈-Alkyl substituiertes Phenyl oder eine Gruppe 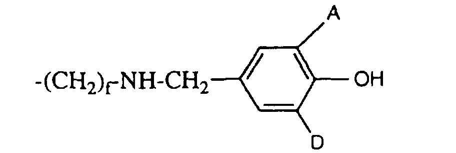 bedeutet
- R'₁₁: Wasserstoff, C₁-C₁₈-Alkyl, Cyclohexyl, oder eine Gruppe 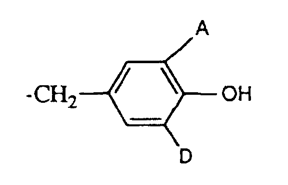 ist, oder
- R'₁₀ und R'₁₁: zusammen C₄-C₈-Alkylen, das durch -O- oder -NH-unterbrochen sein kann, bedeuten
- a: 0, 1, 2 oder 3 ist, b 0, 1, 2 oder 3 ist, c 1 oder 2 ist, d 1 bis 5 ist, f 2 bis 8 ist und q 1, 2, 3 oder 4 ist.

Bevorzugt ist eine phenolische Verbindung Formel III, worin
- A: Wasserstoff, C₁-C₈-Alkyl, Cyclohexyl, Phenyl oder eine Gruppe -CH₂-S-C₁-C₁₈-Alkyl oder 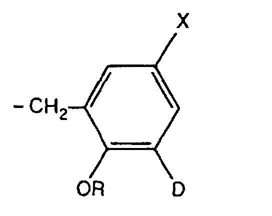 bedeutet,
- D: C₁-C₈-Alkyl, Cyclohexyl, Phenyl oder eine Gruppe -CH₂-S-C₁-C₁₈-Alkyl bedeutet,
- X: Wasserstoff, C₁-C₈-Alkyl oder eine der Gruppen -CₐH₂ₐ-S_{q}-R'₂, -C_{b}H_{2b}-CO-OR'₃, -CH₂N(R'₁₀) (R'₁₁), 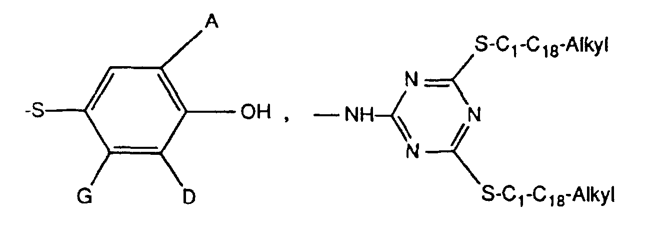 oder 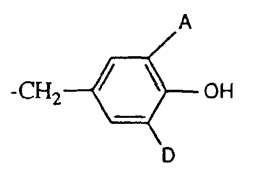 ist,
- R'₂: C₁-C₁₂-Alkyl, Phenyl oder eine Gruppe -(CH₂)_{c}-CO-OR'₄ bedeutet,
- R'₃: C₁-C₁₈-Alkyl oder eine Gruppe 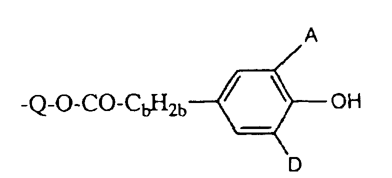 bedeutet, worin Q C₂-C₈-Alkylen, -CH₂-CH₂-S-CH₂CH₂ oder eine Gruppe -CH₂CH₂(OCH₂CH₂)_{d}ist,
- R'₄: C₁-C₂₄-Alkyl bedeutet,
- R'₁₀ und R'₁₁: unabhängig voneinander Wasserstoff oder C₁-C₁₈-Alkyl, sind oder
- R'₁₀ und R'₁₁: zusammen C₄-C₈-Alkylen, das durch -O- oder -NH-unterbrochen sein kann, bedeuten
- a: 1 oder 2 ist, b 1 oder 2 ist, c 1 oder 2 ist und d 1, 2 oder 3 ist.

Besonders bevorzugt sind weiterhin Antioxidantien, die mindestens eine Gruppe der Formel 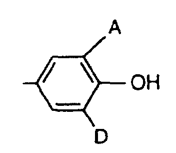 enthalten, worin A Wasserstoff, Methyl oder tert-Butyl und D gegebenenfalls substituiertes Alkyl oder gegebenenfalls substituiertes Alkylthioalkyl ist

Beispielhaft für bevorzugte Antioxidantien seien genannt:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol und Mischungen davon.
2. Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methyl-cyclohexyl)-phenol], 2,2'-Methylen-bis-(4-methyl-6-cyclohexylphenol), 2,2'-Methylenbis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(26-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-ditert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, lsooctyl-3,5-di-tert-butyl-4-hydroxybenzyl-mercaptoacetat.
7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 24-Bis-octylmercapto-6-(35-di-tert-butyl-4-hydroxyanilino)- 1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydrcxyphenylpropionyl)-hexahydro-1,3,5-triazin, 1,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5 -di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethylesters, Triphenylphosphit, Diphenylalkylphosphite, Phenyldialkylphosphite, Tris-(nonylphenyl)phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-ditert-butylphenyl)-pentaerythritdiphosphit, Bis-(2,6-di-tert-butyl-4-methylphenyl)pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)pentaerythritdiphosphit, Tristearyl-sorbit-triphosphit, Tetrakis-(2,4-di-tert-butylphenyl)4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-di-benz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, (C₉H₁₉-C₆H₄-O)_{1,5}-P-(O-C₁₂₋₁₃H₂₅₋₂₇)_{1,5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit,Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2] -octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)-ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Davon sind besonders bevorzugt die Antioxidantien der Gruppen 1-5, 10 und 12, insbesondere 2,2-Bis-(4-hydroxyphenyl)-propan und die Ester der 3,5-Di-tert-butyl-4-hydroxyphenylpropionsäure mit Octadecanol oder Pentaerythrit, oder Tris-(2,4-di-tert-butylphenyl)-phosphit.

Gegebenenfalls kann auch ein Gemisch verschiedener Antioxidantien eingesetzt werden.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile PVC, angewandt werden.

### Füllstoffe

Als Füllstoffe werden z.B. Kreide, Kaolin, China-Clay, Talk, Silikate, Glasfasern, Glaskugeln, Holzmehl, Glimmer, Metalloxide, Metallhydroxide, Ruß, Graphit, Gesteinsmehl, und Schwerspat verwendet. Bevorzugt sind Kreide und Talk.

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

Als Weichmacher kommen beispielsweise solche aus den folgenden Gruppen in Betracht:
A) Phthalate (Phthalsäureester): Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und -Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat.
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester, beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.
D) Epoxyweichmacher: In der Hauptsache sind das epoxidierte ungesättigte Fettsäuren wie z.B. epoxidiertes Sojabohnenöl.
E) Polymerweichmacher: Eine Definition dieser Weichmacher und Beispiele für solche sind im Handbuch "Plastics Additives", Herausgeber R. Gächter und H. Müller, Hanser Publishers, 1985, Seite 393, Kapitel 5.9.6, sowie in "PVC Technology ", Herausgeber W.V. Titow, 4th, Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und C₉-C₁₁-Alkanolgemische. Besonders vorteilhaft sind Polyesterweichmacher aus den genannten Dicarbonsäuren und monofunktionellen Alkoholen.
F) Phosphorsäureester: Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie ®Reofos 50 und 95.
G) Chlorierte Kohlenwasserstoffe (Paraffine)
H) Kohlenwasserstoffe
I) Monoester, z.B. Butyloleat, Phenoxyethyloleat, Tetrahydrofurfuryloleat und Alkylsulfonsäureester.
J) Glykolester, z.B. Diglykolbenzoate. Definitionen und Beispiele für Weichmacher der Gruppen G) bis J) sind den folgenden Handbüchern zu entnehmen:
   "Plastics Additives", Herausgeber R. Gächter und H. Müller, Hanser Publishers, 1985, Kapitel 5.9.14.2 (Gruppe G)), und Kapitel 5.9.14.1 (Gruppe H)).
   "PVC Technology", Herausgeber W.V Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis G), insbesondere A) bis F), vor allem die in diesen Gruppen als bevorzugt herausgestellten Weichmacher.

Im allgemeinen sind von den Weichmachern der Gruppen A), B), C) und E) 5 bis 120, besonders 10 bis 100 Teile,
von denen der Gruppe D) 0,5 bis 30, besonders 0,5 bis 20 Teile,
und von denen der Gruppen F) bzw. G) 1 bis 100, besonders 2 bis 80 Teile vorhanden.

Es können auch Mischungen unterschiedlicher Weichmacher verwendet werden.

Die Weichmacher können in einer Menge von beispielsweise 5 bis 120, zweckmäßig 10 bis 100 und insbesondere 20 bis 70 Gew.-Teilen, bezogen auf 100 Gew.-Teile PVC, angewandt werden.

### Weitere Metallstabilisatoren

Hier sind vor allem die Organozinnstabilisatoren zu nennen. Insbesondere kann es sich um Carboxylate, Mercaptide und Sulfide handeln. Geeignete Verbindungen sind in US 4,743,640 beschrieben (Sp. 3-5).

### 1,3-Diketone

Verwendbare 1,3-Dicarbonylverbindungen können lineare oder cyclische Dicarbonylverbindungen sein. Bevorzugt werden Dicarbonylverbindungen der Formel verwendet, 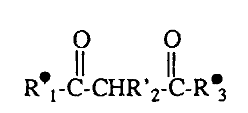 worin R^{•}₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R^{•}₅-S-R^{•}₆ oder -R^{•}₅-O-R^{•}₆ bedeutet, R^{•}₂ Wasserstoff, C₁-C₈-Alkyl, C₂-C₁₂Alkenyl, Phenyl, C₇-C₁₂-Alkylphenyl, C₇-C₁₀-Phenylalkyl oder eine Grupe -CO-R^{•}₄ bedeutet, R^{•}₃ eine der für R^{•}₁ gegebenen Bedeutungen hat oder C₁-C₁₈-Alkoxy bedeutet, R^{•}₄ C₁-C₄-Alkyl oder Phenyl bedeutet,

R^{•}₅ C₁-C₁₀-Alkylen bedeutet und R^{•}₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone der EP-A-346 279 und die Oxa- und Thia-diketone der EP-A-307 358 ebenso wie die auf Isocyansäure basierenden Diketone der US 4,339,383.

R^{•}₁ und R^{•}₃ als Alkyl können insbesondere C₁-C₁₈-Alkyl sein, wie z.B. Methyl, Ethyl, n-Propyl, Isopropyl, n-Butyl, tert Butyl, Pentyl, Hexyl, Heptyl, Octyl, Decyl, Dodecyl oder Octadecyl.

R^{•}₁ und R^{•}₃ als Hydroxyalkyl stellen insbesondere eine Gruppe -(CH₂)ₙ-OH dar, worin n 5, 6 oder 7 ist.

R^{•}₁ und R^{•}₃ als Alkenyl können beispielsweise Vinyl, Allyl, Methallyl, 1-Butenyl, 1-Hexenyl oder Oleyl bedeuten, vorzugsweise Allyl.

R^{•}₁ und R^{•}₃ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

R^{•}₁ und R^{•}₃ als Phenylalkyl sind insbesondere Benzyl. R^{•}₂ und R^{•}₃ als Cycloalkyl oder Alkyl-cycloalkyl sind insbesondere Cyclohexyl oder Methylcyclohexyl.

R^{•}₂ als Alkyl kann insbesondere C₁-C₄-Alkyl sein. R^{•}₂ als C₂-C₁₂-Alkenyl kann insbesondere Allyl sein. R^{•}₂ als Alkylphenyl kann insbesondere Tolyl sein. R^{•}₂ als Phenylalkyl kann insbesondere Benzyl sein. Vorzugsweise ist R^{•}₂ Wasserstoff. R^{•}₃ als Alkoxy kann z.B. Methoxy, Ethoxy, Butoxy, Hexyloxy, Octyloxy, Dodecyloxy, Tridecyloxy, Tetradecyloxy oder Octadecyloxy sein, R^{•}₅ als C₁-C₁₀-Alkylen ist insbesondere C₂-C₄-Alkylen. R^{•}₆ als Alkyl ist insbesondere C₄-C₁₂-Alkyl, wie z.B. Butyl, Hexyl, Octyl, Decyl oder Dodecyl. R^{•}₆ als Alkylphenyl ist insbesondere Tolyl. R^{•}₆ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, 7-tert-Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis (2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester und Dehydracetsäure sowie deren Zink- oder Magnesiumsalze.

Bevorzugt sind 1,3-Diketoverbindungen der obigen Formel, worin R^{•}₁ C₁-C₁₈-Alkyl, Phenyl, durch OH, Methyl oder Methoxy substituiertes Phenyl, C₇-C₁₀-Phenylalkyl oder Cyclohexyl ist, R^{•}₂ Wasserstoff ist und R^{•}₃ eine der für R^{•}₁ gegebenen Bedeutungen hat.

Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

Perchlorate bzw. Perchlorsäure der Formel M(ClO₄)ₙ wobei M für H⁺, NH₄⁺, Na⁺, K⁺, Mg²⁺, Ca²⁺, Ba²⁺ oder Al³⁺ steht, könnenebenfalls zugesetzt werden. Der Index n ist entsprechend der Wertigkeit von M 1, 2 oder 3.

Die Perchlorsäure oder das jeweilige Perchlorat können dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder eingebunden durch chemische Reaktion in einen Hydrotalcit.

Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Als UV-Absorber und Lichtschutzmittel kommen beispielsweise in Betracht:
1. 2-(2'-Hydroxyphenyl)-benztriazole, wie z.B. 2-(2-Hydroxy-5-methylphenyl)benztriazol, 2-(3',5'-Di-tert-butyl-2'-hydroxyphenyl)-benztriazol, 2-(5'-tert-Butyl2'-hydroxyphenyl)-benztriazol, 2-(2'-Hydroxy-5'-(1,1,3,3-tetramethylbutyl)phenyl)-benztriazol, 2-(3',5'-Di-tertbutyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlorbenztriazol, 2-(3'-tert-Butyl-5'-[2-(2-ethylhexyloxy)-carbonylethyl]-2' -hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; [R-CH₂CH₂-COO (CH₂)₃ 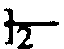 mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-Phenylsalicylat, Octylphenyl-salicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-ditert-butylphenylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Oxalsäurediamide, wie z.B. 4,4'-Di-octyloxy-oxanilid, 2,2'-Di-octyloxy-55'-ditert-butyl-oxanilid, 2,2'-Di-dodecyloxy-5,5'di-tert-butyl-oxanilid, 2-Ethoxy-2'-ethyloxanilid, N,N'-Bis-(3-dimethylaminopropyl)-oxalamid, 2-Ethoxy-5-tert-butyl-2'-ethyloxanilid und dessen Gemisch mit 2-Ethoxy-2-ethyl-5,4'-di-tert-butyl-oxanilid, Gemische von o- und p-Methoxy- sowie von o- und p-Ethoxy-di-substituierten Oxaniliden.
7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyl-oxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht: Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat oder Ethylenglykolbismercaptoacetat.

Als Gleitmittel kommen beispielsweise in Betracht:
Montanwachs, Fettsäureester, PE-Wachse, Amidwachse, Chlorparaffine, Glycerinester oder Erdalkaliseifen. Verwendbare Gleitmittel sind auch in "Plastics Additives", Herausgeber R. Gächter und H. Müller, Hanser Verlag, 3. Auflage, 1990, Seiten 466-470 beschrieben. Für die Verwendung von Calciumseifen gilt, daß diese in für Gleitmittel üblichen Mengen, bevorzugt kleiner 0,3 Teile, besonders bevorzugt kleiner 0,2 Teile je 100 Teile PVC, eingesetzt werden.

Als weitere metallfreie Stabilisatoren kommen beispielsweise β-Naphthol,
β-Aminocrotonate (z.B. wie in EP 0 465 405, S. 6, Z. 9-14 erwähnt), Phenylindole, Pyrrole, wie z.B. in EP-A-465405 beschrieben sowie Hydroxydiphenylamine in Betracht.

Als Polyole kommen beispielsweise in Betracht:
Pentaerythrit, Dipentaerythrit, Tripentaerythrit, Bistrimethylolpropan, Bistrimethylolethan, Trismethylolpropan, Sorbit, Lycasin, Mannit, Lactose, Tris-(hydroxyethyl)-isocyanurat, Tetramethylolcyclohexanol, Tetramethylolcyclopentanol, Tetramethylolcyclopyranol, Glycerin, Diglycerin oder Polyglycerin.

Die Polyole können in einer Menge von beispielsweise 0,01 bis 20, zweckmäßig 0,1 bis 20 und insbesondere 0,1 bis 10 Gew.-Teilen, bezogen auf 100 Gew.-Teile PVC, eingesetzt werden.

Es kommen organische Phosphite der allgemeinen Formel P(OR)₃ in Betracht, wobei die Reste R gleiche oder verschiedene Alkyl-, Alkenyl-, Aryl- oder Aralkyl-Reste bedeuten. Bevorzugte organische Phosphite sind solche der Formeln 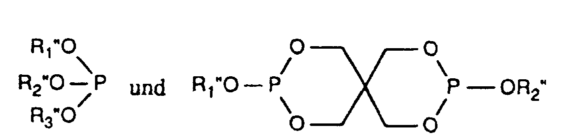 worin R₁", R₂" und R₃" gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R₁", R₂" und R₃" C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R₁", R₂" und R₃" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert-butylphenyl)-di-dodecylphosphit, (2,6-Di-tert-butylphenyl)-di-dodecylphosphit und die Dialkyl-und Diaryl-pentaerythrit-diphosphite, wie Distearylpentaerythrit-diphosphit, sowie nichtstöchiometrische Triarylphosphite. z.B. der Zusammensetzung (H₁₉C₉-C₆H₄)O_{1,5}P(OC_{12,13}H_{25,27})_{1,5}. Bevorzugte organische Phosphite sind Distearyl-pentaerythrit-diphosphit, Trisnonylphenylphosphit und Phenyl-didecyl-phosphit.

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

Bevorzugt ist eine Zusammensetzung bestehend aus PVC, Poly-DHP, einer Verbindung aus der Gruppe bestehend aus Hydrotalcit, Zeolith, Dawsonit, Magadiit, Kenyait, Disaccharidalkohol und sterisch gehindertem Amin und einer Zn-Seife.

Bevorzugt sind Zusammensetzungen enthaltend (a) PVC, (b) 0,001 - 5 Teile Poly-DHP je 100 Teile PVC (c) 0,1-20 Teile je 100 Teile PVC eines Hydrotalcites, Zeolithes, Dawsonites, Magadiites, Kenyaites, Disaccharidalkoholes oder 0,01 bis 5 Teile eines gehinderten Amins und (d) 0,01-10,0 Teile je 100 Teile PVC einer Zinkseife.

Bevorzugt ist ferner eine PVC Zusammensetzung enthaltend die anfangs beschriebenen Komponenten (a), (b), (c) und (d) sowie zusätzlich mindestens einen Stoff aus der Gruppe der der Weichmacher, Füllstoffe und Verstärkungsmittel, Antioxidantien, Metallseifen, weiteren Metallstabilisatoren, Polyole, organischen Phosphite, 1,3-Diketoverbindungen, Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Perchlorate, Epoxide,
Pyrrole, Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

Bevorzugt ist ferner eine PVC Zusammensetzung, die zusätzlich eine 1,3-Diketoverbindung, insbesondere in einer Menge von 0,01-10 Teilen je 100 Teile PVC, enthält.

Bevorzugt ist ferner eine PVC Zusammensetzung, die zusätzlich ein Polyol, bevorzugt Trishydroxyethylisocyanurat (THEIC), insbesondere in einer Menge von 0,01-20 Teilen je 100 Teile PVC, enthält.

Bevorzugt ist ferner eine PVC Zusammensetzung, enthaltend zusätzlich mindestens ein Additiv aus der Gruppe der organischen Phosphite, metallfreien Stabilisatoren (wie β-Aminocrotonate, Pyrrole, Hydroxydiphenylamine sowie β-Naphthol), Polyole und 1,3-Diketone.

Bevorzugt ist ferner eine PVC Zusammensetzung, die zusätzlich ein organisches Phosphit, insbesondere in einer Menge von 0,01-5 Teilen je 100 Teile PVC, enthält.

Bevorzugt ist ferner eine PVC Zusammensetzung, die zusätzlich ein Antioxidans enthält.

Besonders bevorzugt ist eine PVC Zusammensetzung, die zusätzlich eine Calcium- und/oder Zinkseife, ein Polyol und ein β-Diketon enthält

Besonders bevorzugt ist auch eine PVC Zusammensetzung, die zusätzlich einen Füllstoff enthält.

Ein weiterer Gegenstand der vorliegenden Erfindung ist eine Stabilisatorkombination bestehend aus
- Poly-DHP der Formel I, wie anfangs dargestellt,
- einem Stoff aus der Gruppe bestehend aus
   kristallinen oder amorphen Zeolithen,
   sowie
- mindestens einer Zn-, Al- oder Lanthanoidenverbindung,
und besonders die Verwendung einer solchen Kombination zur Stabilisierung von PVC.

Für die einzelnen Stabilisatoren sowie das PVC selbst gelten die vorstehend erläuterten Bevorzugungen, ebenso kann zusätzlich einer der oben beschriebenen weiteren Bestandteile verwendet werden.

Zweckmäßig kann die Einarbeitung der Stabilisatoren nach folgenden Methoden erfolgen:
- als Emulsion oder Dispersion (Eine Möglichkeit ist z.B. die Form einer pastösen Mischung. Ein Vorteil der erfindungsgemäßen Kombination besteht bei dieser Darreichungsform in der Stabilität der Paste.);
- Als Trockenmischung während des Vermischens von Zusatzkomponenten oder Polymermischungen;
- durch direktes Zugeben in die Verarbeitungsapparatur (z.B. Kalander, Mischer, Kneter, Extruder und dergleichen) oder
- als Lösung oder Schmelze.

Das erfindungsgemäße stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.

Die Erfindung betrifft somit auch ein Verfahren zur Herstellung von stabilisiertem PVC, dadurch gekennzeichnet, daß man unter Verwendung von Vorrichtungen, wie Kalandern, Mischern, Knetern, Extrudern und dergleichen, die vorstehend beschriebenen Komponenten (b) (c) und (d) und gegegbenenfalls weitere Zusätze mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte PVC kann auch zu Schaumstoffen verarbeitet werden. Setzt man als Treibmittel Azodicarbonamid ein, ist es vorteilhaft, wenn keine 1,3-Diketone zusätzlich verwendet werden.

Das erfindungsgemäße PVC eignet sich für Halbhart- und Weich-Rezepturen, insbesondere in Form von Weichrezepturen für Drahtummantelungen, Crash pad-Folien (Automobile), Kabelisolierungen, welche besonders bevorzugt ist. In Form von Halbhart-Rezepturen eignet sich das erfindungsgemäße PVC besonders für Dekorationsfolien, Schaumstoffe. Agrarfolien, Schläuche, Dichtungsprofile und Bürofolien.

In Form von Hart-Rezepturen eignet sich das erfindungsgemäß stabilisierte PVC besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushaltsgeräte).

Beispiele für die Anwendung des erfindungsgemäßen PVC als Plastisol sind Kunstleder, Bodenbeläge, Textilbeschichtungen, Tapeten, Coil-Coatings und Unterbodenschutz für Kraftfahrzeuge.

Beispiele für Sinter-PVC-Anwendungen des erfindungsgemäß stabilisierten PVC sind Slush, Slush Mould und Coil-Coatings.

## Patentansprüche

1. Zusammensetzung enthaltend
(a) PVC
(b) mindestens eine Poly-DHP-Verbindung der Formel I 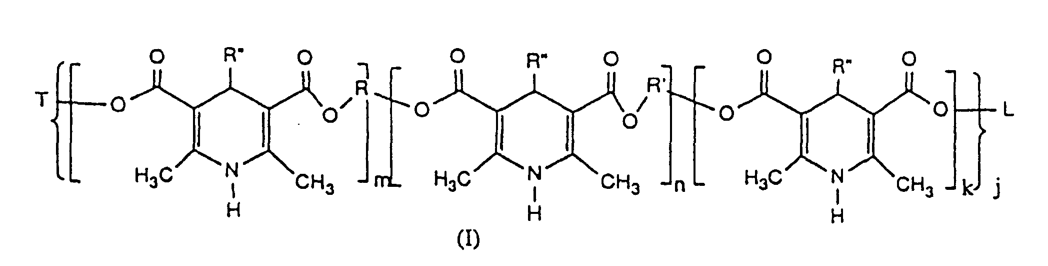 worin
T für unsubstituiertes oder mit C₁-C₁₈-Alkoxy, C₁-C₁₈-Alkylthio, Hydroxy, Acryloyloxy, Methacryloyloxy, Halogen, Phenyl oder Naphthyl substituiertes C₁-C₂₂ Alkyl;
unsubstituiertes oder mit C₁-C₁₈-Alkyl, C₁-C₁₈-Alkoxy oder Halogen substitulertes C₆-C₁₀-Aryl, das auch heterocyclisch sein kann;
C₃-C₁₀-Alkenyl, CH₃-CO-CH₂-CO-OR-, CH₃-CO-CH₂-COO-R',
CH₃-C(NR"₂)=CH-COOR- oder CH₃-C(NR"₂)=CHCO-O R'-ist
L dieselben Bedeutungen wie T hat oder einen tri- oder polyvalenten Rest aus einer unsubstituierten oder C₁-C₁₂-Alkoxy-, C₁-C₁₂-Thioalkoxy-, C₅-C₁₀-Aryl-,
C₁-C₁₂-Carboxyl- oder Hydroxysubstituierten gerad- oder verzweigtkettigen Alkylgruppe darstellt,
m und n Zahlen von 0 bis 20, bedeuten,
k 0 oder 1 ist,
j eine Zahl von 1 bis 6 bedeutet und die Bedingungen j (k+ m + n) > 1 und m + n > 0 erfüllt sind,
R und R' unabhängig voneinander Methylen oder Phenylen sind oder eine Alkylengruppe des Typs-(-CₚH₂ₚ-X-)ₜCₚH₂ₚ- sind, die unsubstituiert ist oder Substituenten aus der Reihe C₁-C₁₂-Alkoxy, C₁-C₁₂-Thioalkoxy, C₅-C₁₀-Aryl-, C₁-C₁₂-Carboxyl- oder Hydroxy trägt,
p 2 bis 18 ist,
t 0 bis 10 ist
X für Sauerstoff oder Schwefel steht
oder, wenn k 0 ist und j > 1 ist, R und R' zuammen mit L eine direkte Bindung bedeuten,
R" Wasserstoff, oder unsubstituiertes oder mit einem oder mehreren C₁-C₁₂-Alkyl-,
C₁-C₈-Alkoxy-, Halogen- oder NO₂- Substituenten substituiertes C₁-C₁₈-Alkyl,
C₂-C₁₈-Alkyoxycarbonyl oder C₆-C₁₀-Aryl bedeutet,
und die beiden R"' gleich oder verschieden sind und Wasserstoff, C₁-C₁₈-Alkyl,
C₁-C₁₈-Hydroxyalkyl oder C₁-C₁₈-Alkoxyalkyl oder zusammen ununterbrochenes oder durch O unterbrochenes C₃-C₅-Alkylen, bedeuten,
oder gerad- oder verzweigtkettiges C₂-C₂₂-Alkenyl sind,
(c) mindestens einen Stoff aus der Gruppe bestehend aus
kristallinen oder amorphen Zeolithen, sowie
(d) mindestens eine Zn-, Al- oder Lanthanoidverbindung.

2. Zusammensetzung gemäß Anspruch 1, wobei in Formel I T und L unabhängig voneinander C₁-C₁₈-Alkyl sind,
m, k und j 1 sind
n 0 ist,
R für -(CH₂)₂-, -(CH₂)₄- oder -(CH₂)₂-S-(CH₂)₂- steht und
R* Wasserstoff ist.

3. Zusammensetzung gemäß Anspruch 1, wobei der Zeolith der Formel
M_{q/a}[(AlO₂)_{q}(SiO₂)ᵣ]·wH₂O (X)
entspricht,
wobei a die Ladung des Kations M,
M ein Element der ersten oder zweiten Hauptgruppe, sowie Zink,
q : r eine Zahl zwischen 0,8 und unendlich, vorzugsweise zwischen 0,8 und 10,5 und
w eine Zahl zwischen 0 und 300 ist,
entspricht.

4. Zusammensetzung gemäß Anspruch 1, enthaltend als Komponente d) ein Zn-, Al- oder Lanthanoiden-Carboxylat.

5. Zusammensetzung gemäß Anspruch 1, enthaltend zusätzlich Stoffe, ausgewählt aus der Gruppe der Weichmacher, Füllstoffe und Verstärkungsmittel, Antioxidantien, Metallseifen, weiteren Metallstabilisatoren, Polyole, organischen Phosphite, 1,3-Diketoverbindungen, Lichtschutzmittel, UV-Absorber, Gleitmittel, Fettsäureester, Paraffine, Treibmittel, optischen Aufheller. Pigmente, Flammschutzmittel, Antistatika, β-Aminocrotonate, Perchlorate, Epoxide,
Pyrrole, Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

6. Zusammensetzung gemäß Anspruch 1, enthaltend die Komponenten (a) und (b), als Komponente (c) einen Hydrotalcit, als Komponente (d) eine Zink-Seife sowie zusätzlich einen Weichmacher, eine Calcium-Seife, ein Antioxidans, ein 1,3 Diketon, ein Polyol und ein Gleitmittel.

7. Zusammensetzung gemäß Anspruch 1, enthaltend (a) PVC, (b) 0,001-5 Teile Poly-DHP der Formel I je 100 Teile PVC, (c) 0,1 bis 20 Teile je 100 Teile PVC eines Zeolithes und (d) 0,001 bis 10 Teile je 100 Teile PVC einer Zn-, Al- oder Lanthanoidenverbindung.

8. Zusammensetzung gemäß Anspruch 1, enthaltend zusätzlich einen Füllstoff.

9. Zusammensetzung gemäß Anspruch 1, enthaltend zusätzlich mindestens ein Additiv aus der Gruppe der metallfreien Stabilisatoren, Phosphite, Polyole oder 1,3-Diketone.

10. Zusammensetzung gemäß Anspruch 1, enthaltend zusätzlich mindestens ein organisches Phosphit.

11. Stabilisatorkombination bestehend aus
- Poly-DHP der Formel I nach Anspruch 1.
- einem Stoff aus der Gruppe bestehend aus
kristallinen oder amorphen Zeolithen, sowie
- mindestens einer Zn-. Al- oder Lanthanoidverbindung.

12. Verwendung einer Kombination aus
- Poly-DHP der Formel I nach Anspruch 1,
- einem Stoff aus der Gruppe bestehend aus
kristallinen oder amorphen Zeolithen, sowie
- mindestens einer Zn-, Al- oder Lanthanoidverbindung zum Stabilisieren von PVC.

13. Verfahren zur Herstellung von stabilisiertem PVC, **dadurch gekennzeichnet, daß** man unter Verwendung von Vorrichtungen, wie Kalander, Mischer, Kneter, Extruder und dergleichen, die Komponenten (b) (c) und (d) gemäß Anspruch 1 und gegebenenfalls weitere Zusätze mit dem PVC vermischt.

14. Verwendung der Zusammensetzung gemäß Anspruch 1 zur Herstellung von aus PVC herstellbaren Formkörpern.

15. Verwendung gemäß Anspruch 13 zur Herstellung von Drahtummantelungen, Kabelisolierungen, Dekorationsfolien, Schaumstoffen, Agrarfolien, Schläuchen, Dichtungsprofilen, Bürofolien, Hohlkörpern, Verpackungsfolien, Blasfolien, Crash pad-Folien, Rohren, Schwerprofilen Lichtwandprofilen, Bauprofilen, Sidings, Fittings, Apparate-Gehäusen, Kunstleder, Bodenbelägen, Textilbeschichtungen, Tapeten, Coil-Coatings oder Unterbodenschutz für Kraftfahzeuge.

## Claims

1. A composition comprising
(a) PVC
(b) at least one polyDHP compound of the formula I 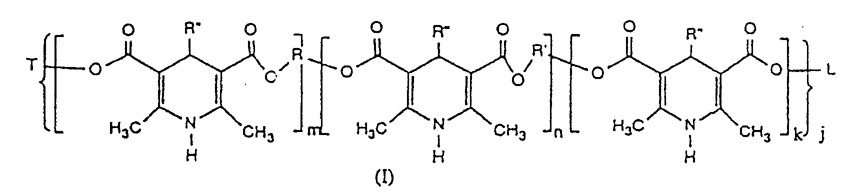 in which
T is C₁-C₂₂alkyl which is unsubstituted or substituted by C₁-C₁₈alkoxy, C₁-C₁₈alkylthio, hydroxyl, acryloyloxy, methacryloyloxy, halogen, phenyl or naphthyl;
C₆-C₁₀aryl, which may also be heterocyclic and is unsubstituted or substituted by C₁-C₁₈alkyl, C₁-C₁₈alkoxy or halogen;
C₃-C₁₀alkenyl, CH₃-CO-CH₂-CO-OR-, CH₃-CO-CH₂-COO-R',
CH₃-C(NR□₂)=CH-COOR- or CH₃-C(NR□₂)=CHCO-O-R'-,
L is as defined for T or is a trivalent or polyvalent radical formed from a straight-chain or branched alkyl group which is unsubstituted or substituted by C₁-C₁₂alkoxyl C₁-C₁₂thioalkoxy, C₅-C₁₀aryl, C₁-C₁₂carboxyl or hydroxyl,
m and n are numbers from 0 to 20,
k is 0 or 1,
J is a number from 1 to 6 and the conditions j (k + m + n) > 1 and m + n > 0 are fulfilled,
R and R', independently of one another, are methylene or phenylene or an alkylene group of the -(-CₚH₂ₚ-X-)₁CₚH₂ₚ-type which is unsubstituted or carries substituents from the series consisting of C₁-C₁₂alkoxy, C₁-C₁₂thioalkoxy, C₅-C₁₀aryl, C₁-C₁₂carboxyl and hydroxyl,
p is from 2 to 18,
t is from 0 to 10,
X is oxygen or sulphur
or, if k is 0 and j > 1, R and R', together with L, are a direct bond,
R" is hydrogen or C₆-C₁₀aryl, C₂-C₁₈alkoxycarbonyl [sic] or C₁-C₁₈alkyl which is unsubstituted or substituted by one or more C₁-C₁₂alkyl, C₁-C₈alkoxy, halogen or NO₂ substituents,
and the two R□ are identical or different and are hydrogen, C₁-C₁₈alkyl, C₁-C₁₈hydroxyalkyl or C₁-C₁₈alkoxyalkyl or together are C₃-C₅alkylene which is uninterrupted or interrupted by O,
or are straight-chain or branched C₂-C₂₂alkenyl,
or amorphous zeolites, and
(c) at least one substance from the group consisting of crystalline
(d) at least one zinc, aluminium or lanthanoid compound.

2. A composition according to claim 1, where, in formula I, T and L, independently of one another, are C₁-C₁₈alkyl,
m, k and j are 1,
n is 0,
R is-(CH₂)₂-, -(CH₂)₄- or -(CH₂)₂-S-(CH₂)₂-, and
R" is hydrogen.

3. A composition according to claim 1, where the zeolite conforms to the formula
M_{q/a}[(AlO₂)_{q}(SiO₂)ᵣ]·wH₂O (X)
where a is the charge of the cation M,
M is an element from the first or second main group or zinc,
q:r is a number from 0.8 to infinity, preferably from 0.8 to 10.5, and
w is a number from 0 to 300.

4. A composition according to claim 1, wherein component d) is a zinc, aluminium or lanthanoid carboxylate.

5. A composition according to claim 1, additionally comprising substances from the group consisting of plasticizers, fillers and reinforcing materials, antioxidants, metal soaps, further metal stabilizers, polyols, organic phosphites, 1,3-diketo compounds, light stabilizers, UV absorbers, lubricants, fatty acid esters, paraffins, blowing agents, optical brighteners, pigments, flameproofing agents, antistatics, β-aminocrotonates, perchlorates, epoxides, pyrroles, naphthols, hydroxydiphenylamines, phenylindoles, phosphates, thiophosphates, gelling aids, peroxide scavengers, modifiers and further complexing agents for Lewis acids.

6. A composition according to claim 1, comprising components (a) and (b), a hydrotalcite as component (c), a zinc soap as component (d), and additionally a plasticizer, a calcium soap, an antioxidant, a 1,3-diketone, a polyol and a lubricant.

7. A composition according to claim 1, comprising (a) PVC, (b) 0.001-5 parts of polyDHP of the formula I per 100 parts of PVC, (c) 0.1-20 parts of a zeolite per 100 parts of PVC, and (d) 0.001-10 parts of a zinc, aluminium or lanthanoid compound per 100 parts of PVC.

8. A composition according to claim 1, additionally comprising a filler.

9. A composition according to claim 1, additionally comprising at least one additive from the group consisting of metal-free stabilizers, phosphites, polyols or 1,3-diketones.

10. A composition according to claim 1, additionally comprising at least one organic phosphite.

11. A stabilizer combination comprising
- polyDHP of the formula I according to claim 1,
- a substance from the group consisting of crystalline or amorphous zeolites, and
- at least one zinc, aluminium or lanthanoid compound.

12. The use of a combination of
- polyDHP of the formula I according to claim 1,
- a substance from the group consisting of crystalline or amorphous zeolites, and
- at least one zinc, aluminium or lanthanoid compound for stabilizing PVC.

13. A process for the preparation of stabilized PVC, which comprises mixing components (b), (c) and (d) according to claim 1 and, if desired, further additives with the PVC using equipment such as calenders, mixers, compounders, extruders and the like.

14. The use of the composition according to claim 1 for the production of mouldings which can be produced from PVC.

15. The use according to claim 13 for the production of wire sheaths, cable insulations, decoration sheeting, foams, agricultural sheeting, tubes, sealing profiles, office films, hollow articles, packaging films, blown films, crash pad films, tubes, heavy profiles light-wall profiles, building profiles, sidings, fittings, equipment housings, artificial leather, floor coverings, textile coatings, wall coverings, coil coatings or automobile underseal.

## Revendications

1. Composition contenant
(a) du PVC;
(b) au moins un composé de poly-DHP de formule I : 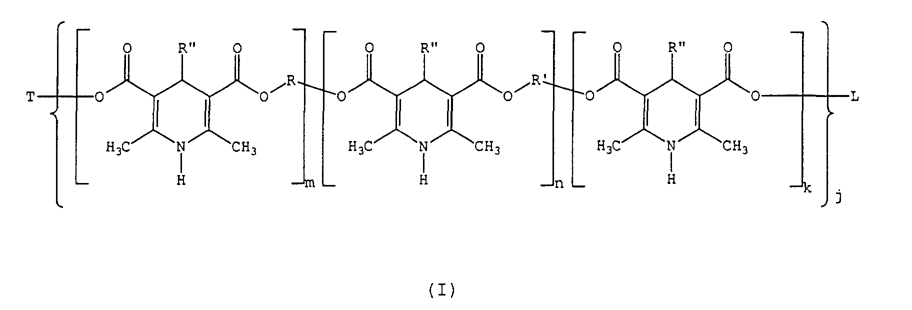 dans laquelle
T est un alkyle en C₁-C₂₂ non substitué ou substitué avec un alkoxy en C₁-C₁₈, un alkylthio en C₁-C₁₈, un hydroxy, un acryloyloxy, un méthacryloyloxy, un halogène, un phényle ou un naphtyle;
un aryle, qui peut également être hétérocyclique, en C₆-C₁₀ non substitué ou substitué avec un alkyle en C₁-C₁₈, un alkoxy en C₁-C₁₈ ou un halogène;
un alcényle en C₃-C₁₀, CH₃-CO-CH₂-CO-OR-, CH₃-CO-CH₂-COO-R', CH₃-C(NR'"₂)=CH-COOR- ou CH₃-C(NR'"₂)=CHCO-OR' ;
L a les mêmes significations que T ou représente un radical trivalent ou polyvalent provenant d'un groupement alkyle à chaîne linéaire ou ramifiée non substitué ou substitué avec un alkoxy en C₁-C₁₂, un thioalkoxy en C₁-C₁₂, un aryle en C₅-C₁₀, un carboxyle en C₁-C₁₂ ou un hydroxy;
m et n signifient des nombres de 0 à 20;
k est 0 ou 1;
j signifie un nombre de 1 à 6 et les conditions j(k+m+n) > 1 et m+n > 0 sont satisfaites;
R et R' sont indépendamment l'un de l'autre un méthylène ou un phénylène ou un groupement alkylène du type -(-CₚH₂ₚ-X-)ₜCₚH₂ₚ-, qui est non substitué ou qui porte des substituants de la série des alkoxy en C₁-C₁₂, des thioalkoxy en C₁-C₁₂, des aryles en C₅-C₁₀, des carboxyles en C₁-C₁₂ ou un hydroxy;
p est 2 à 18;
t est 0 à 10;
X signifie un oxygène ou un soufre
ou, lorsque k est 0 et j > 1, R et R' désignent ensemble avec L une liaison directe;
R" signifie un hydrogène ou un alkyle en C₁-C₁₈, un alkoxycarbonyle en C₂-C₁₈ ou un aryle en C₆-C₁₀ non substitué ou substitué avec un ou plusieurs substituants alkyle en C₁-C₁₂, alkoxy en C₁-C₈, halogène ou NO₂-, et
les deux R'" sont identiques ou différents et signifient un hydrogène, un alkyle en C₁-C₁₈, un hydroxyalkyle en C₁-C₁₈ ou un alkoxyalkyle en C₁-C₁₈ ou signifient ensemble un alkylène en C₃-C₅ non interrompu ou interrompu par un O,
ou sont un alcényle en C₂-C₂₂ à chaîne linéaire ou ramifiée;
(c) au moins une substance provenant du groupe composé de zéolithes cristallines ou amorphes; ainsi que
(d) au moins un composé du Zn, de l'Al ou de lanthanides.

2. Composition suivant la revendication 1, dans laquelle T et L, dans la formule I, sont indépendamment l'un de l'autre un alkyle en C₁-C₁₈;
m, k et j sont 1;
n est 0;
R signifie -(CH₂)₂-, -(CH₂)₄- ou - (CH₂)₂-S-(CH₂)₂-, et
R" est un hydrogène.

3. Composition suivant la revendication 1, dans laquelle la zéolithe correspond à la formule
M_{q/a}[(AlO₂)_{q}(SiO₂)ᵣ]·wH₂O (X),
dans laquelle a correspond à la charge du cation M;
M est un élément du premier ou du deuxième groupe principal, tel que le zinc;
q:r est un nombre entre 0,8 et l'infini, de préférence entre 0,8 et 10,5, et
w est un nombre entre 0 et 300.

4. Composition suivant la revendication 1, contenant comme composant d) un carboxylate de Zn, d'Al ou de lanthanides.

5. Composition suivant la revendication 1, contenant des substances supplémentaires choisies dans le groupe des plastifiants, des charges et des agents de renforcement, des antioxydants, des savons métalliques, d'autres stabilisants métalliques, des polyols, des phosphites organiques, des composés 1,3-dicéto, des agents de protection contre la lumière, des absorbeurs d'UV, des lubrifiants, des esters d'acide gras, des paraffines, des produits moussants, des agents de blanchiment optique, des pigments, des agents antiflamme, des agents antistatiques, des β-aminocrotonates, des perchlorates, des époxydes, des pyrroles, des naphtols, des hydroxydiphénylamines, des phénylindoles, des phosphates, des thiophosphates, des auxiliaires de gélification, des composés antiperoxydes, des modificateurs et autres complexants pour acides de Lewis.

6. Composition suivant la revendication 1, contenant les composants (a) et (b), une hydrotalcite comme composant (c), un savon au zinc comme composant (d) ainsi qu'un plastifiant, un savon au calcium, un antioxydant, une 1,3-dicétone, un polyol et un lubrifiant supplémentaires.

7. Composition suivant la revendication 1, contenant (a) du PVC, (b) 0,001 à 5 parties de poly-DHP de formule I par 100 parties de PVC, (c) 0,1 à 20 parties par 100 parties de PVC, d'une zéolithe et (d) 0,001 à 10 parties par 100 parties de PVC d'un composé de Zn, d'Al ou de lanthanides.

8. Composition suivant la revendication 1, contenant en outre une charge.

9. Composition suivant la revendication 1, contenant en outre au moins un additif du groupe des stabilisants, des phosphites, des polyols ou des 1,3-dicétones sans métal.

10. Composition suivant la revendication 1, contenant en outre au moins un phosphite organique.

11. Combinaison de stabilisant, composée :
- de poly-DHP de formule I suivant la revendication 1;
- d'une substance du groupe composé de zéolithes cristallines ou amorphes; ainsi que
- au moins un composé de Zn, d'Al ou de lanthanides.

12. Utilisation d'une combinaison de
- poly-DHP de formule I suivant la revendication 1;
- d'une substance du groupe composé de zéolithes cristallines ou amorphes; ainsi que
- au moins un composé de Zn, d'Al ou de lanthanides, pour la stabilisation du PVC.

13. Procédé de préparation de PVC stabilisé, **caractérisé en ce que** l'on mélange avec le PVC, en utilisant des dispositifs tels qu'une calandre, un mélangeur, un malaxeur, une extrudeuse et autres, les composants (b), (c) et (d) suivant la revendication 1 et, le cas échéant, d'autres additifs.

14. Utilisation de la composition suivant la revendication 1 pour la fabrication de corps moulés pouvant être fabriqués en PVC.

15. Utilisation suivant la revendication 13 pour la fabrication de guipages par fil, d'isolations de câble, de films décoratifs, de produits alvéolaires, de films pour l'agriculture, de tuyaux, de joints d'étanchéité profilés, de feuilles pour bureau, de corps creux, de films d'emballage, de lamelles de soufflage, de films pour tableau de bord, de tubes, de profilés massifs, de profilés pour mur lumineux, de profilés pour la construction, de panneaux décoratifs, de raccords, de boîtiers pour appareillage, de similicuir, de revêtements de sol, de revêtements textiles, de papiers peints, de revêtement pour bande ou de protections de bas de caisse pour automobiles.
